# DEMANDE DE BREVET EUROPEEN

(11) **EP 1 443 225 A1**
(43) Date de publication de la demande: **04.08.2004**
(21) Numéro de dépôt: 04290143.9
(22) Date de dépôt: 20.01.2004
(51) Int. Cl.: F16B 13/00, F16B 37/12

(54) **Cheville d'ancrage pour matériau friable**

(30) Priorité: 29.01.2003 FR 0300999
(71) Demandeur: SOCIETE DE PROSPECTION ET D'INVENTIONS TECHNIQUES SPIT, 26501 Bourg-Les-Valence (FR)
(72) Inventeur: Gauthier, Alain, 07300 Saint Jean de Muzols (FR)
(74) Mandataire: Bloch, Gérard

(57) **Abrégé**

La cheville comprend un corps (1) sensiblement cylindrique, avec une portion de perçage (3) pourvue, à son extrémité libre, de dents de perçage (14-16), à l'autre extrémité du corps, une collerette d'appui (5) et un filet de vis extérieur (7), caractérisée par le fait que la portion de perçage (3)est agencée en une portion de foret.

## Description

L'invention concerne une cheville d'ancrage pour matériau friable, tel qu'un panneau de cloison sèche par exemple du type de celui de la marque protégée Placoplâtre.

Plus particulièrement, l'invention concerne une cheville d'ancrage pour matériau friable, comprenant un corps sensiblement cylindrique avec une extrémité de perçage, à l'autre extrémité, une collerette d'appui et un filet de vis.

Pour insérer une telle cheville dans un support en matériau friable, pour reprendre cet exemple, il suffit de visser la cheville dans le support sans qu'il soit nécessaire de percer au préalable un trou dans le support, comme cela est le cas avec de nombreuses autres chevilles d'ancrage. Grâce à cela, on simplifie beaucoup la pose.

Après l'ancrage de la cheville dans le support, pour fixer une pièce au support, soit on introduit un élément de fixation dans l'alésage du corps de la cheville, si le corps de cheville est creux et percé d'un tel alésage, soit on visse un écrou sur la portion de tige filetée prolongeant le corps de cheville au-delà de sa collerette d'appui, si tel est le cas.

Une cheville du type défini ci-dessus est connue par le document EP 0 165 674.

Dans une des chevilles de ce document, l'extrémité de perçage est constituée d'une lame plate d'une certaine longueur avec, à son extrémité libre, des dents de perçage, l'utilité d'une telle disposition étant que l'opération de perçage proprement dite soit sensiblement achevée avant que le filet de vis extérieur de la cheville ne commence à tarauder le matériau support.

Mais il peut arriver que les panneaux supports, même en matériau friable, aient une dureté un peu trop grande pour de telles chevilles d'ancrage et fassent naître le risque soit de casser la lame de perçage soit de rendre impossible l'ancrage des chevilles.

Par le document US 6 354 779, on connaît une cheville d'ancrage pour matériau friable, comprenant un corps sensiblement cylindrique, avec une portion de perçage pourvue, à son extrémité libre, de dents de perçage, à l'autre extrémité du corps, une collerette d'appui et un filet de vis extérieur, enroulé autour du corps dans un sens, la portion de perçage étant agencée en une portion de foret.

Toutefois, la dent centrale de la portion de foret de perçage se présente comme un cône de centrage appointé, sans arrête de coupe, si bien que la cheville de ce dernier document présente l'inconvénient, du fait que la dent centrale se limite à pousser la matière, de risquer de faire éclater le panneau.

La présente invention vise à éliminer ce risque.

A cet effet, l'invention concerne une cheville d'ancrage pour matériau friable, comprenant un corps sensiblement cylindrique, avec une portion de perçage pourvue, à son extrémité libre, de dents de perçage, à l'autre extrémité du corps, une collerette d'appui et un filet de vis extérieur, enroulé autour du corps dans un sens, la portion de perçage étant agencée en une portion de foret, caractérisée par le fait que la portion de foret de perçage comporte deux gorges en hélice dans le même sens que le filet de vis extérieur qui débouchent chacune sur une surface plane formant la paroi d'une dent centrale de perçage et d'une de deux dents de perçage latérales, ménagée dans une nervure de foret bordant en aval ladite gorge.

C'est un peu comme si on avait pris la cheville à lame de perçage de l'art antérieur et qu'on avait vrillé la lame dans le même sens que l'enroulement du filet de vis extérieur, avec une tenue parfaite lors de l'opération de perçage, même en cas de trop grande dureté du matériau qui, sinon, aurait provoqué une torsion de la lame dans le sens inverse.

Pour reprendre l'analogie avec la lame de perçage vrillée, on remarquera que les nervures de la portion de foret pourraient être assimilées aux deux tranches latérales constituées dans l'épaisseur de la lame.

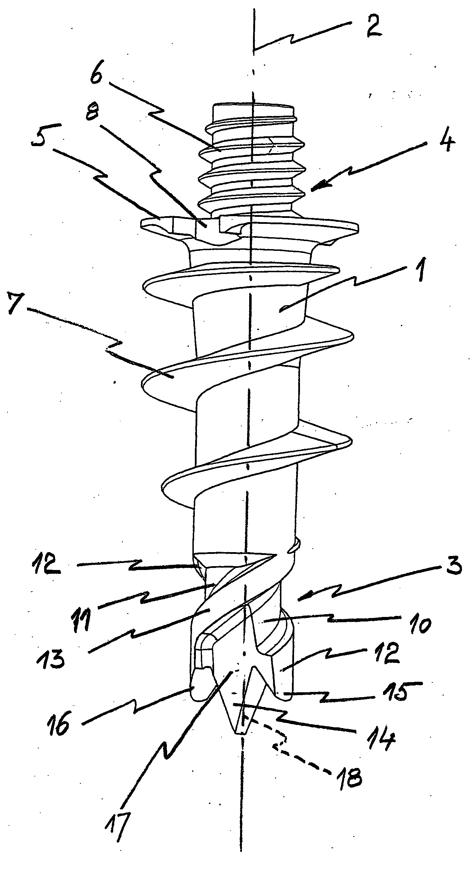

L'invention sera mieux comprise à l'aide de la description suivante de la forme de réalisation préférée de la cheville de l'invention, en référence à la figure unique annexée qui la représente en perspective.

La cheville d'ancrage représentée au dessin comporte un corps 1, sensiblement cylindrique, d'axe 2, avec une extrémité de perçage 3 et une extrémité d'appui et ici de fixation 4.

L'extrémité d'appui et de fixation 4 comporte une collerette d'appui 5 à l'extrémité du corps 1 opposée à l'extrémité de perçage et au-delà de laquelle s'étend une portion de tige filetée 6, de même axe 2 que le corps de cheville 1 et de diamètre sensiblement plus petit que celui de la collerette, destinée à recevoir un écrou pour fixer au support, dans lequel la cheville est elle-même destinée à être ancrée, une pièce traversée par cette portion de tige 6.

Un filet de vis extérieur 7 s'enroule autour du corps de cheville, dans un sens ici dextrogyre depuis la collerette d'appui 5, selon un pas déterminé, le filet de vis 7 étant espacé de la collerette 5 de moins d'un pas. Le diamètre extérieur du filet de vis 7 est sensiblement le double du diamètre du corps 1.

La collerette d'appui 5 présente deux évidements diamétraux 8 de réception de deux ergots d'un outil d'entraînement de la cheville en rotation pour l'ancrer dans le support.

L'extrémité de perçage 3 est une portion de foret à deux gorges 10, 11 enroulées dans le même sens que le filet de vis 7, entre deux nervures 12, 13, l'une aval et l'autre amont, pour l'une 10 des gorges et inversement pour l'autre 11 des gorges. A son extrémité libre, cette portion de foret 3 porte des dents de perçage, ici une dent centrale 14 et deux dents latérales moins longues 15, 16. Chaque gorge 10, 11 débouche sur une surface plane 17, 18 formant la paroi de la dent centrale 14 et la paroi de la dent latérale 15, 16 ménagée dans la nervure aval 12, 13 correspondante bordant la gorge considérée. Les deux parois planes 17, 18 de la dent centrale 14 ménagent sur cette dent quatre arêtes de coupe 20 qui permettent, au-delà de la fonction de centrage de la cheville, exercée par cette dent, de couper la matière et pas seulement de la pousser.

Quand on entraîne la cheville en rotation, donc ici dans le sens dextrogyre, la dent centrale 14 maintient la cheville le long de son axe 2, alors que les dents latérales 15, 16 coupent le papier de couverture du support en matériau friable. Après que le papier a été découpé, les trois dents continuent de percer un trou dans le support pendant qu'on entraîne la cheville en rotation. Du fait que l'extrémité de perçage 3 est en forme de foret, elle assure facilement sa fonction de perçage sans risque de casse, même dans un matériau assez dur. Par ailleurs, les poussières de matériau crées par le perçage sont facilement évacuées le long des gorges 1.0, 11 avant l'introduction du filet de vis 7 dans le matériau et du taraudage de celui-ci. Grâce aux arêtes de coupe 20 de la dent centrale 14, le papier de couverture antérieur (dans la direction d'entraînement de la cheville) du panneau pour poursuivre avec l'exemple du panneau de cloison sèche, c'est-à-dire celui qui est caché, n'est pas éclaté.

## Revendications

1. Cheville d'ancrage pour matériau friable, comprenant un corps (1) sensiblement cylindrique, avec une portion de perçage (3) pourvue, à son extrémité libre, de dents de perçage (14-16), à l'autre extrémité du corps, une collerette d'appui (5) et un filet de vis extérieur (7), enroulé autour du corps (1) dans un sens, la portion de perçage (3) étant agencée en une portion de foret, **caractérisée par le fait que** la portion de foret de perçage (3) comporte deux gorges (10, 11) en hélice dans le même sens que le filet de vis extérieur (7) qui débouchent chacune sur une surface plane (17, 18) formant la paroi d'une dent centrale de perçage (14) et d'une (15 ; 16) de deux dents de perçage latérales, ménagée dans une nervure de foret (12 ; 13) bordant en aval ladite gorge (10 ; 11).

2. Cheville selon la revendication 1, dans laquelle une portion de tige filetée (6) prolonge le corps de cheville (1) au-delà de la collerette d'appui (5).

3. Cheville selon l'une des revendications 1 et 2, dans laquelle le corps de cheville est creux et percé d'un alésage.
